# EUROPEAN PATENT APPLICATION

(11) **EP 2 538 182 A2**
(43) Date of publication of application: **26.12.2012**
(21) Application number: 12172094.0
(22) Date of filing: 14.06.2012
(51) Int. Cl.: G01H 1/00

(54) **Severity analysis apparatus and method for shafts of rotating machinery**

(30) Priority: 22.06.2011 US 201113166205
(71) Applicant: Honeywell International Inc., Morristown, NJ 07962-2245 (US)
(72) Inventor: Kar, Chinmaya, Morristown, NJ New Jersey 07962-2245 (US); Kini, Venkataramana Bantwal, Morristown, NJ New Jersey 07962-2245 (US); Dave, Sanjay K., Morristown, NJ New Jersey 07962-2245 (US)
(74) Representative: Houghton, Mark Phillip

(57) **Abstract**

A method includes receiving (402) one or more vibration signals representing physical vibrations generated by a shaft (104) of a machine (106) during operation. The method also includes determining (404) a rotational speed of the shaft. The method further includes identifying (406) one or more sets of frequency components of the vibration signals based on the speed of the shaft, where each set of frequency components is associated with an operational characteristic of the shaft. In addition, the method includes determining (408) one or more health indicators of the shaft based on relative energy levels of the frequency components in each set of frequency components.

## Description

### TECHNICAL FIELD

This disclosure is generally directed to monitoring and control systems. More specifically, this disclosure is directed to a severity analysis apparatus and method for shafts of rotating machinery.

### BACKGROUND

Almost all types of rotating machinery include shafts. A shaft may be used to transfer mechanical power from a source of rotational power to a suitable load. Sources of rotational power can include electric or gas motors and turbines. Rotating machines may have a single shaft or multiple shafts that are coupled together, such as by using gears or belt drive mechanisms. Depending on its use, the failure of a shaft in a rotating machine may be dangerous and cause significant maintenance and safety issues.

In many cases, failure of a shaft may cause minimal impact at its inception but more significant damage if not corrected in a timely manner. For example, a shaft that cracks because of stress may not halt operation of its associated machine. However, if the machine continues to operate without appropriate maintenance, the crack may progress to a full break, which can damage other portions of the machine or components around the machine.

### SUMMARY

This disclosure provides a severity analysis apparatus and method for shafts of rotating machinery.

In a first embodiment, a method includes receiving one or more vibration signals representing physical vibrations generated by a shaft of a machine during operation. The method also includes determining a rotational speed of the shaft. The method further includes identifying one or more sets of frequency components of the vibration signals based on the speed of the shaft. Each set of frequency components is associated with an operational characteristic of the shaft. In addition, the method includes determining one or more health indicators of the shaft based on relative energy levels of the frequency components in each set of frequency components.

In a second embodiment, an apparatus includes at least one interface configured to receive one or more vibration signals representing physical vibrations generated by a shaft of a machine during operation. The apparatus also includes at least one processing unit configured to determine a rotational speed of the shaft and identify one or more sets of frequency components of the vibration signals based on the speed of the shaft. Each set of frequency components is associated with an operational characteristic of the shaft. The at least one processing unit is also configured to determine one or more health indicators of the shaft based on relative energy levels of the frequency components in each set of frequency components.

In a third embodiment, a computer readable medium embodies a computer program. The computer program includes computer readable program code for receiving one or more vibration signals representing physical vibrations generated by a shaft of a machine during operation. The computer program also includes computer readable program code for determining a rotational speed of the shaft. The computer program further includes computer readable program code for identifying one or more sets of frequency components of the vibration signals based on the speed of the shaft. Each set of frequency components is associated with an operational characteristic of the shaft. In addition, the computer program includes computer readable program code for determining one or more health indicators of the shaft based on relative energy levels of the frequency components in each set of frequency components.

Other technical features may be readily apparent to one skilled in the art from the following figures, descriptions, and claims.

### BRIEF DESCRIPTION OF THE DRAWINGS

For a more complete understanding of this disclosure and its features, reference is now made to the following description, taken in conjunction with the accompanying drawings, in which:

FIGURE 1 illustrates an example severity analysis system according to this disclosure;

FIGURES 2 and 3 illustrate an example overall vibration level and example operational characteristics of a shaft according to this disclosure;

FIGURE 4 illustrates an example process for determining one or more health indicators for a shaft according to this disclosure;

FIGURE 5 illustrates an example vibration severity analyzer according to this disclosure; and

FIGURE 6 illustrates example health indicators for a shaft according to this disclosure.

### DETAILED DESCRIPTION

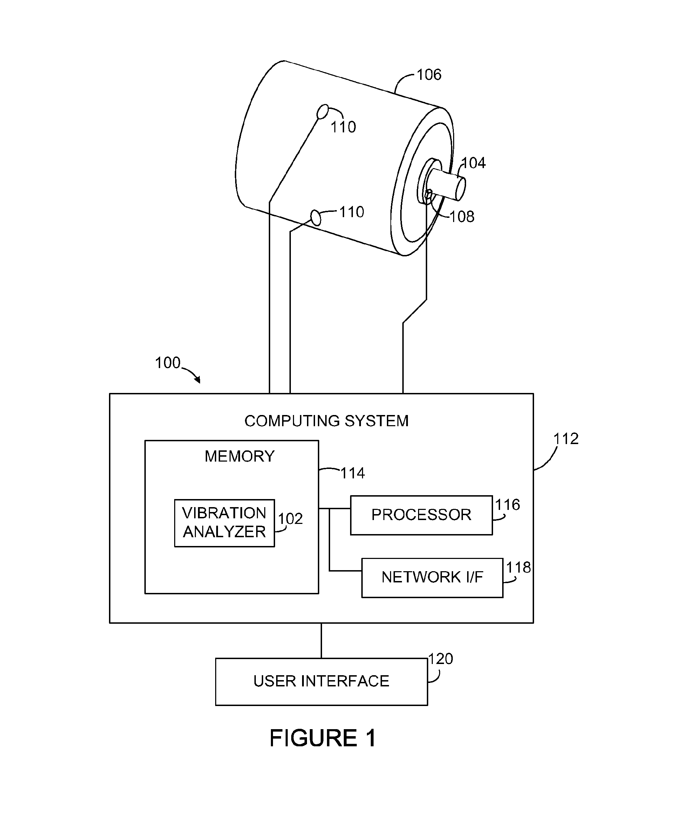

FIGURES 1 through 6, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

FIGURE 1 illustrates an example severity analysis system 100 according to this disclosure. As shown in FIGURE 1, the system 100 includes a vibration severity analyzer 102, which analyzes physical vibrations generated by one or more shafts 104 of a machine 106 during operation. For example, the analyzer 102 can receive signals from a tachometer 108 and/or one or more vibration transducers 110 physically coupled to the machine 106. The analyzer 102 could then analyze the received signals to determine the health or operational status of the machine 106 or its shaft 104.

The tachometer 108 measures rotational speeds of the shaft 104 and generates signals indicative of the measured rotational speeds. The tachometer 108 may represent any suitable type of device. For example, the tachometer 108 may include a pick-up coil mounted on the machine's housing that functions with another coil, magnet, or other electromagnetic structure mounted on the shaft 104 to generate a short electrical pulse with each revolution of the shaft 104. In other embodiments, the tachometer 108 may be implemented within the analyzer 102 or other device, such as by using software instructions. In these embodiments, the analyzer 102 or other device could determine the rotational speed of the shaft 104 indirectly, such as by estimating the speed of the shaft 104 using signals received from the transducers 110.

Each of the vibration transducers 110 represents any type of device that converts vibrational energy into signals representing the vibrational energy. In some embodiments, the vibration transducers 110 may include one or more accelerometers that measure vibrational energy along one or more orthogonal directions. Accelerometers may include, for example, electro-magnetic or piezo-electric elements for converting vibrational energy into electrical signals.

The machine 106 represents any device having one or more shafts 104. Examples of the machine 106 may include electric or gas motors, fans, pumps, generators, or impellers. In many cases, multiple shafts 104 of one or more machines 106 may be coupled to one another to provide a useful function. For instance, a shaft of an electric motor may be coupled to a pump so that a fluid may be pumped using electrical power supplied to the electric motor.

The shaft 104 of the machine 106 may have certain inherent operational characteristics associated with its use. For example, operational characteristics of the shaft 104 may include its rotational speed, its level of alignment with shafts of other machines, or a level of wear present in bearings that support the shaft 104 in a relatively fixed position relative to the machine 106. In many cases, these operational characteristics may generate certain types and levels of vibrations during operation. For the rotational speed operational characteristic, a shaft 104 may generate vibrational energy at a fundamental frequency of its speed. Thus, a shaft 104 turning at 3,600 revolutions-per-minute (RPM) may generate vibrational energy at approximately 60 Hertz. A shaft that is coupled to a shaft of another machine may generate vibrational energy at a multiple (such as twice) of its rotational speed due to misalignment of one shaft relative to the other. Also, a shaft may generate vibrational energy at multiple differing harmonics of its rotational speed due to bearing wear or other factors.

In accordance with this disclosure, the analyzer 102 analyzes vibration data associated with the machine 106 and determines the health or condition of the shaft 104. For example, the analyzer 102 can determine a rotational speed of the shaft 104, such as by using the tachometer 108 or by using the data from the transducers 110. The analyzer 102 can also receive vibration signals from the transducers 110 and identify one or more sets of frequency components. Each set of frequency components could be associated with a particular operational characteristic of the shaft 104. The analyzer 102 could further determine one or more health indicators of the shaft 104 based on relative energy levels of the frequency components present in each set of frequency components. In this way, the analyzer 102 can detect problems with the shaft 104 specifically or the machine 106 in general. Ideally, this detection occurs before more serious damage is suffered by the machine 106 or the surrounding components.

The analyzer 102 includes any suitable structure for receiving and analyzing vibration signals. For example, the analyzer 102 could be implemented using hardware only or a combination of hardware and software/firmware instructions. In this example, the analyzer 102 is implemented using a computing system 112 that includes at least one memory unit 114, at least one processing unit 116, and at least one network interface 118. The at least one memory unit 114 includes any suitable volatile and/or non-volatile storage and retrieval device(s), such as a hard disk, an optical storage disc, RAM, or ROM. The at least one processing unit 116 includes any suitable processing structure(s), such as a microprocessor, microcontroller, digital signal processor, application specific integrated circuit, or field programmable gate array. The at least one network interface 118 includes any suitable structure(s) for communicating over one or more networks, such as a wired Ethernet interface or a wireless interface. This represents one specific way in which the analyzer 102 can be implemented, and other implementations of the analyzer 102 could be used. When implemented using software and/or firmware, the analyzer 102 may include any suitable program instructions that analyze vibrations of one or more machines 106.

A user interface 120 can be used to interact with the analyzer 102, such as to initiate analysis and view analysis results or alarms. The user interface 120 includes any suitable structure for providing information to a user and receiving information from the user. For example, the user interface 120 could represent a display device.

Although FIGURE 1 illustrates one example of a severity analysis system 100, various changes may be made to FIGURE 1. For example, the system 100 could include any number of analyzers 102, shafts 104, machines 106, tachometers 108, transducers 110, computing systems 112, and user interfaces 120. Also, the functional division shown in FIGURE 1 is for illustration only. Various components in FIGURE 1 could be combined, further subdivided, or omitted and additional components could be added according to particular needs. For instance, the computing system 112 could be integrated into the user interface 120. In addition, the machine 106 could have any suitable structure with any number of components and any arrangement with other machines.

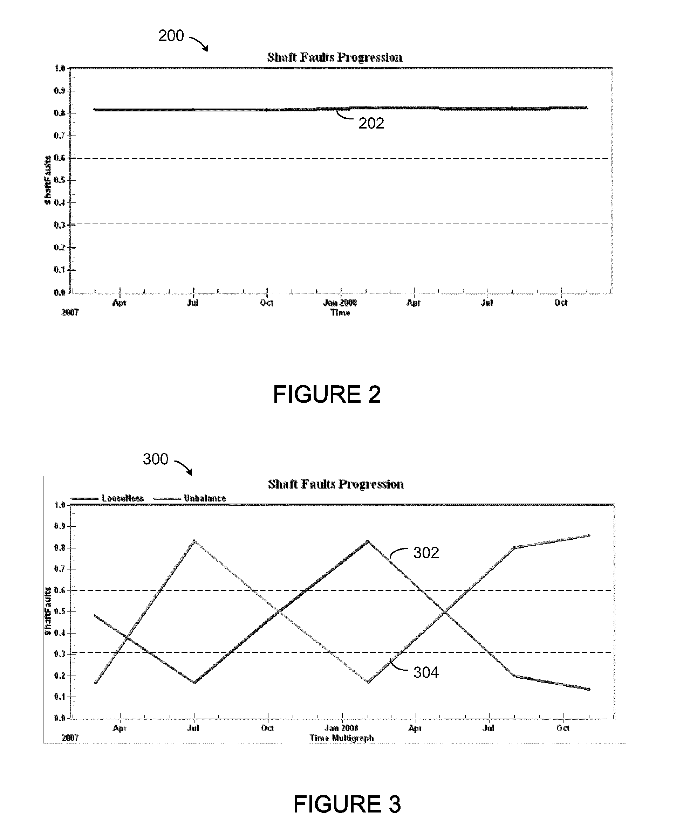

FIGURES 2 and 3 illustrate an example overall vibration level and example operational characteristics of a shaft 104 according to this disclosure. In particular, FIGURE 2 illustrates a graph 200 showing a plot 202 representing overall vibration levels of a shaft 104, and FIGURE 3 illustrates a graph 300 of several operational characteristic plots 302-304 of the shaft 104. The operational characteristic plots include a shaft looseness plot 302 indicating a looseness of the shaft 104 relative to its housing and a shaft unbalance plot 304 indicating a level of unbalance of the shaft 104 when rotating.

As shown by the overall vibration level plot 202 in FIGURE 2, the overall vibration levels of the shaft 104 change relatively little during this period of time. Nevertheless, the shaft looseness plot 302 and the shaft unbalance plot 304 in FIGURE 3 clearly show that the looseness and imbalance, respectively, of the shaft 104 vary dramatically during this same period of time. Thus, monitoring the overall vibration levels of the shaft 104 may not yield sufficient information in order to detect shaft faults in a timely manner. Further, the information provided by the overall vibration level plot 202 shows that the shaft 104 is exhibiting relatively high vibration levels that may indicate a potential fault condition.

As a result, given only the information provided by the overall vibration level plot 202, one could reasonably conclude that a machine 106 with the shaft 104 should be halted for repair. In reality, the machine 106 could sustain its present operating condition over most or a significant portion of the period of time shown in graphs 200 and 300. The analyzer 102 can therefore be used to provide indications associated with certain operational characteristics of the shaft 104, thereby providing meaningful information that may be used to detect shaft faults in a timely manner.

Although FIGURES 2 and 3 illustrate examples of an overall vibration level and operational characteristics of a shaft 104, various changes may be made to FIGURES 2 and 3. For instance, FIGURES 2 and 3 merely show examples of vibrational characteristics of a rotating machine. Other rotating machines may exhibit differing types and levels of vibrations. As a particular example, two rotating machines of the same type may exhibit differing vibration levels due to numerous factors, such as loading levels, the rate of change of these loading levels, and various external factors like ambient temperature, humidity, and/or airborne debris that may potentially clog or hamper airflow through the machine.

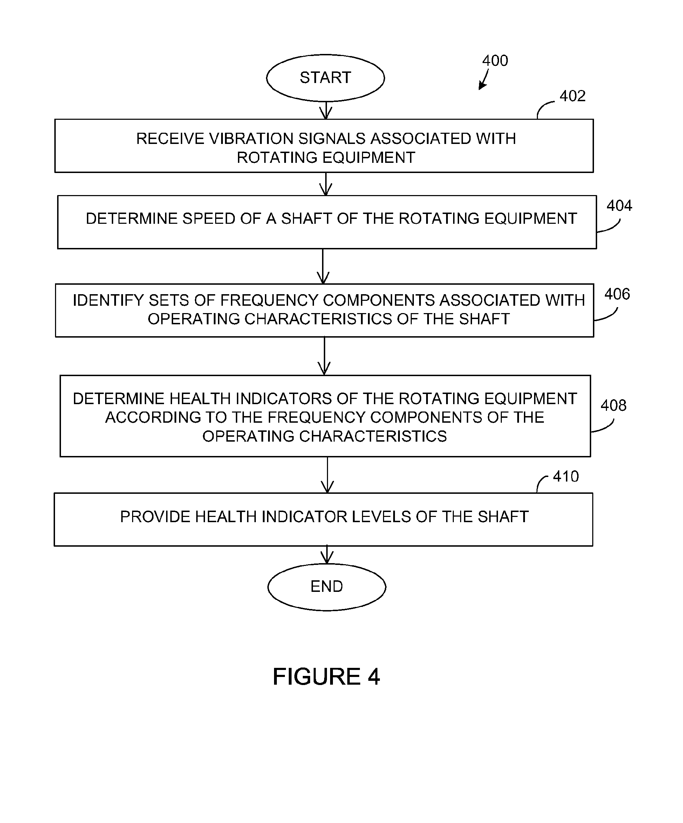

FIGURE 4 illustrates an example process 400 for determining one or more health indicators for a shaft according to this disclosure. For ease of explanation, the process 400 is described with respect to the analyzer 102 analyzing the shaft 104 of FIGURE 1. However, the process 400 could be used with any suitable device or system and with any suitable rotating machinery.

In step 402, the analyzer 102 receives vibration signals representing physical vibrations generated by a rotating machine during operation. The vibration signals may be received from one or more accelerometers temporarily or permanently coupled to the machine. The vibration signals may be received from other or additional types of transducers, such as microphones that are positioned on or near the rotating machine to convert ambient sound pressure generated around the machine into electrical signals suitable for input to the analyzer 102.

In step 404, the analyzer 102 determines a speed of a shaft of the rotating machine. In some embodiments, the speed may be determined using signals received from the tachometer 108 or other speed-measuring device. In other embodiments, the speed may be determined from vibration signals received in step 402. For example, the analyzer 102 may perform a Fourier analysis to derive frequency components of the vibration signals and determine the speed of the shaft according to energy levels of one or a combination of derived frequency components. In many cases, the vibrations generated by a machine may exhibit the highest energy content at the fundamental frequency of the speed of the shaft. Thus, certain embodiments of the analyzer 102 determine the speed of the shaft according to the fundamental frequency component of the received vibration signal.

In step 406, the analyzer 102 identifies sets of frequency components, each of which may be associated with an operational characteristic of the shaft. For example, the analyzer 102 may identify frequency components of the received vibration signals by performing a Fourier analysis on the signals. The analyzer 102 may then select certain frequency components according to the determined speed of the shaft and according to certain regions of increased vibration energy levels relative to the average energy level of the vibration signals. The analyzer 102 may then categorize the frequency components according to the operational characteristic(s) of the shaft. For instance, vibration energy at the fundamental frequency of the shaft may be associated with an unbalance level of the shaft. Vibration energy at twice the fundamental frequency of the shaft may be associated with a misalignment of the shaft. Other harmonic components of the fundamental frequency may be associated with a looseness of the shaft.

In step 408, the analyzer 102 determines one or more health indicators of the shaft based on the relative amplitudes of the sets of frequency components associated with the operational characteristics. In some embodiments, the analyzer 102 may determine the health indicators associated with the shaft by applying one or more membership functions to form Fuzzy rules for each operational characteristic and then combining the Fuzzy rules using Fuzzy logic techniques.

In some embodiments, the analyzer 102 may determine the health indicators using membership functions that provide thresholds for features in a continuous manner. Each feature (such as normalized 1X energy or normalized 2X energy) may have its own set of membership functions. The analyzer 102 may use one or more membership functions that are associated with certain features associated with each components of a machine and combine them using Fuzzy logic rules to determine health indicators for certain components of the machine.

These particular health monitoring techniques may be useful for filtering noise from the received vibration signals. For example, analysis of a particular shaft may show that, during its operation, vibration energy at its fundamental frequency (shaft speed) is high, thus exhibiting an imbalance problem. However, if other harmonic frequencies also exhibit high levels, it may be determined that the relatively high vibrational energy at the fundamental frequency may be caused by other factors, such as inconsistent and/or improper coupling of the transducer 110 to the machine.

In other embodiments, the analyzer 102 may determine the health indicators using a membership component that compares a standard deviation of the amplitudes of the frequency components from each set of frequency components. The standard deviation may be determined from the overall envelope of identified frequency components or from one or more particular frequency components. For example, the analyzer 102 may determine a standard deviation for the fundamental component (speed) of the shaft using a window that is ±5% of the nominal frequency of the speed of the shaft.

In step 410, the analyzer 102 can provide or otherwise use the determined health indicators for the shaft. This could be done, for example, by displaying the information to an operator on a display or by generated an audible or visual alarm if a particular health indicator has exceeded a specified threshold. In this manner, the analyzer 102 may identify potential faults and the probability that a fault is going to occur to operators or other personnel in a timely manner.

Although FIGURE 4 illustrates one example of a process 400 for determining one or more health indicators for a shaft, various changes may be made to FIGURE 4. For example, while shown as a series of steps, various steps in FIGURE 4 could overlap, occur in parallel, occur in a different order, or occur multiple times.

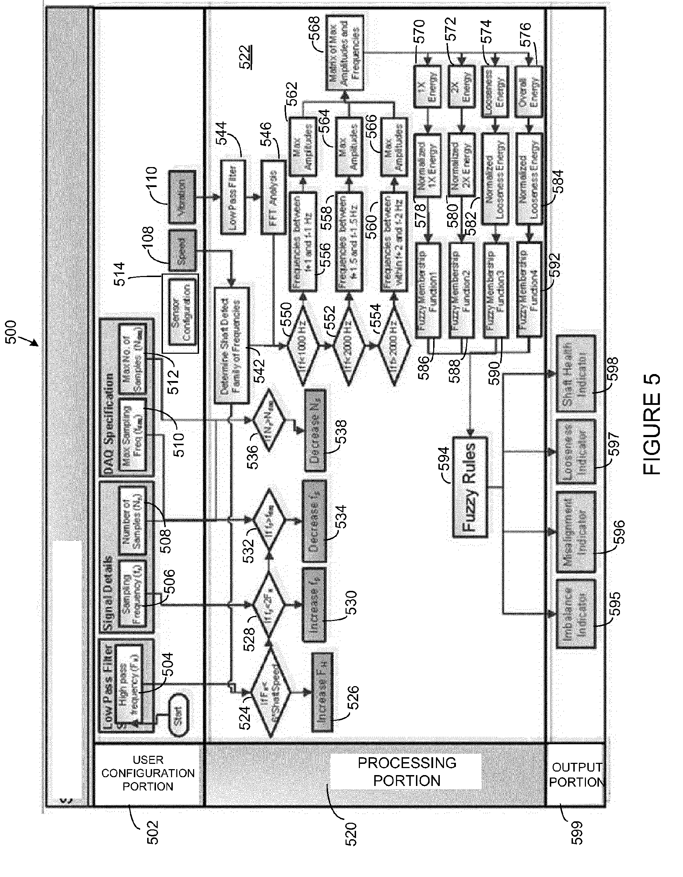

FIGURE 5 illustrates an example vibration severity analyzer 500 according to this disclosure. The analyzer 500 could, for instance, be used as the analyzer 102 in FIGURE 1 to analyze vibration signals for the machine 106 with a shaft 104. However, the analyzer 500 could be used by any other suitable device or system and with any suitable rotating machinery.

In this example, the analyzer 500 includes a user configuration portion 502. The user configuration portion 502 provides a user interface that facilitates operator interaction with the analyzer 500. For example, the user configuration portion 502 may enable an operator to enter information used to process received vibration signals in a digital domain. As a particular example, the user configuration portion 502 may allow the operator to enter initial values for a high pass frequency (F_{H}) cut-off point 504. The operator can also enter signal details, such as an initial sampling frequency (fₛ) 506 and the number of samples (Nₛ) 508 taken. In addition, the operator can enter initial digital acquisition values, such as a maximum sampling frequency (f_{daq}) 510 and a maximum number of samples (N_{daq}) 512. The analyzer 500 can store the information that is received via the user configuration portion 502 in a memory 514 as a sensor configuration.

The analyzer 500 also includes a processing portion 520. In this example, the processing portion 520 includes a processor core 522. The processor core 522 can include one or more processors adapted to perform various functions. These functions can include manipulating the initial values into adjusted values for processing received vibration signals and speed signals to determine health indicators for rotating machinery.

In this particular example, the processing portion 520 determines if the initial high pass frequency (F_{H}) entered in step 504 is less than six times the measured shaft speed at step 524. If so, the processing portion 520 increases the initial high pass frequency (F_{H}) value in step 526. The processing portion 520 also determines if the initial sampling frequency (fₛ) is less than twice the high pass frequency (F_{H}) value at step 528. If so, the processing portion 520 increases the sampling frequency (fₛ) at step 530. The processing portion 520 further determines if the number of samples (Nₛ) is greater than the maximum sampling frequency (f_{daq}) at step 532. If so, the processing portion 520 decreases the sampling frequency (fₛ) at step 534. In addition, the processing portion 520 may determine if the initial number of samples (Nₛ) is greater than the maximum sampling frequency (f_{daq}) at step 536. If so, the processing portion 520 decreases the number of samples (Nₛ) at step 538.

At step 542, the processing portion 520 determines a shaft defect family of frequencies. This may be accomplished by inputting the measured speed of the shaft and assigning values to various frequency components based on the measured speed. For example, the processing portion 520 may assign a second (2X) harmonic value of approximately 16.5Hz to a shaft that has been measured to be turning at 500 revolutions-per-minute (RPM). In a similar manner, the processing portion 520 may assign values to other frequency components according to the measured speed of the shaft.

The processing portion 520 filters the received vibration signals in step 544 and converts the filtered vibration signals into the frequency domain in step 546. At steps 550-554, the processing portion 520 determines the frequencies of the frequency components (previously determined at step 542). For each frequency component, if the frequency is less than 1000Hz, processing continues at step 556. If the frequency of the frequency component is greater than 1000Hz and less than 2000Hz, processing continues at step 558. If the frequency of the frequency component is greater than 2000Hz, processing continues at step 560.

At step 556, the processing system 520 forms a window having an upper limit of "f+1" above the frequency of the frequency component and a lower limit of "f-1" below the frequency of the frequency component. At step 558, the processing system 520 forms a window having an upper limit of "f+1.5" above the frequency of the frequency component and a lower limit of "f-1.5" below the frequency of the frequency component. At step 560, the processing system 520 forms a window having an upper limit of "f+2" above the frequency of the frequency component and a lower limit of "f-2" below the frequency of the frequency component.

From the windowed frequency components, the processing portion 520 determines the maximum amplitude of each frequency component at steps 562-566. At step 568, the processing portion 520 generates a matrix of the frequency components and their associated amplitude values. The processing portion 520 categorizes the frequency components according to one of a fundamental (1X) frequency component in step 570, a second (2X) frequency component in step 572, and various other frequency components (such as such those having a frequency that is a 0.5X, 1.5X, 2.5X, 3X, 4X, 5X, and/or 6X multiple of the fundamental frequency) in step 574. The processing portion 520 may also include most or all frequency components to determine an overall energy content at step 576.

At steps 578-584, the processing portion 520 normalizes each feature with respect to a baseline value of the feature. The baseline value of a feature is calculated using the same process as is performed in steps 570-576 in which the shaft is operating with no defect. The processing portion 520 also assigns membership functions to the normalized features and Fuzzy rules are formed at steps 586-592. The integration of these rules using Fuzzy logic will provide the shaft's failure mode indicators and health degradation indicators.

Fuzzy membership functions may each include any functional relationship of values that may be attributed to frequency components in order to assess the health of a shaft. For example, uneven wear on a bearing supporting a shaft may result in amplitudes of certain frequency components, such as having a low harmonic values of 0.5X and 1.5X, being elevated relative to other frequency components having higher harmonic values, such as harmonic values of 3X, 5X, and 6X.

At step 594, the processing portion 520 combines the Fuzzy values determined in steps 586-592 to generate various health indicators for the shaft. The health indicators may include, for example, an imbalance indicator 595, a misalignment indicator 596, a looseness indicator 597, and an overall shaft health indicator 598.

An output interface 599 of the analyzer 500 may be configured to send information to another system or device, such as one or more computers or one or more displays. In this example, the output interface 599 may provide health indicators 595-598 to an operator of the analyzer 500. In some embodiments, the health indicators may be presented on a display as numerical values. In this manner, an operator of the analyzer 500 may be trained to identify faults in the shaft according to the displayed numerical values associated with each health indicator. In other embodiments, the health indicators may be presented as a visual and/or audible alarm that activates if a health indicator exceeds one or more specified thresholds stored in the memory 514.

Although FIGURE 5 illustrates one example of a vibration severity analyzer 500, various changes may be made to FIGURE 5. For example, FIGURE 5 illustrates both example components of the analyzer 500 and example operations that could be performed by those components. However, the precise associations of components and operations are for illustration only. Also, values such as the high pass frequency (F_{H}), sampling frequency (fₛ), maximum sampling frequency (f_{daq}), number of samples (Nₛ), and maximum number of samples (N_{daq}) may be selected in any suitable manner that allows the analyzer 500 to properly identify frequency components from received vibration signals. Further, the windowing limits as described in steps 556-560 may represent any suitable values that allow sufficient determination of amplitude levels at each frequency component. In addition, operational characteristics other than those described in steps 570-576 may be incorporated into and used by the analyzer 500.

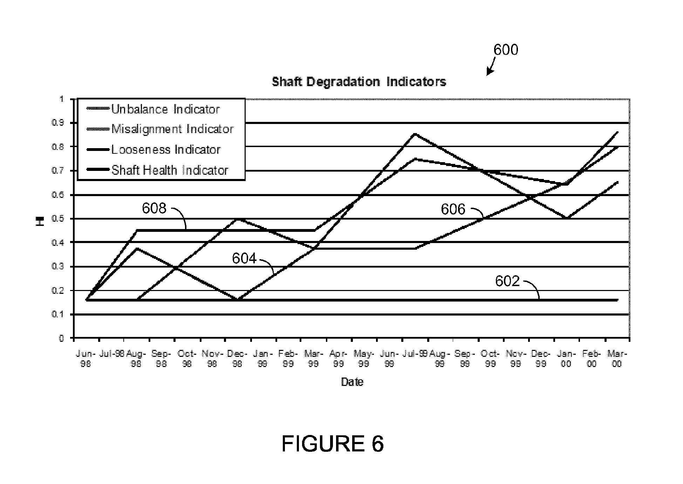

FIGURE 6 illustrates example health indicators for a shaft according to this disclosure. In particular, FIGURE 6 illustrates an example graph 600 showing plots 602-608 representing various health indicators that could be generated by the analyzer 102 of FIGURE 1 or the analyzer 500 of FIGURE 5. Here, the graph 600 includes a misalignment indicator plot 602, a looseness indicator plot 604, an unbalance indicator plot 606, and an overall shaft health indicator plot 608.

As shown in FIGURE 6, the health indicators 604-608 show a gradual progression of their respective faults, a characteristic that may be generally attributed to a rotating machine and its associated components degrading and/or wearing over an extended period of time. The gradual progression of these health indicators contrasts significantly to the plots of FIGURES 2 and 3, which show relatively little progression of the faults over an extended period of time. Moreover, it may be seen that the fluctuation (variance) in the health indicators has been reduced relative to the health indicators as shown in FIGURES 2 and 3.

Although FIGURE 6 illustrates examples of health indicators for a shaft, various changes may be made to FIGURE 6. For example, FIGURE 6 merely shows one example of the health indicators that may be determined for a shaft of a rotating machine over an extended period. Other rotating machines may exhibit differing levels of faults over an extended period of time. Additionally, the analyzer 102 or 500 may generate other types of health indicators.

In the various embodiments described above, an analyzer may analyze vibration signals for a shaft of rotating machinery in an enhanced manner. The analyzer can generate an indication of fault severity progression with reduced fluctuations in the indicators relative to conventional techniques. Inclusion of new frequencies and lower non-synchronous (non-harmonic) frequencies in a looseness-related family of frequencies may help in tracking narrowband energy increases. In addition, some embodiments of the analyzer may provide for the reduction in the number of Fuzzy membership functions, such as by using four membership functions that may be tracked or normalized with respect to certain baseline features. Furthermore, a number of membership functions may be added to each normalized feature, thus producing a gradual fault progression. Fuzzy rules may also be changed or adjusted during operation to reduce fluctuations or variances in the determined health indicators.

In some embodiments, fluctuations in a determined health indicator can be reduced using several techniques. One technique may include averaging the determined health indicator over a specified period of time. Another technique may include averaging the features or normalized features from which the health indicator is derived. A third technique may include averaging the frequency components (in the frequency domain) from which the features are derived. A fourth technique may include averaging features or normalized features in the time domain. A fifth technique may include generating an alarm condition only after a health indicator has exceeded its threshold value for a specified period of time and/or after the health indicator has exceeded its threshold value a specified quantity of times.

In some embodiments, various functions described above are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. For example, some embodiments of the severity analysis system 100 may include an analyzer 102 configured in an embedded device, such as a handheld device that transmits wired or wireless signals representing health indicator information to a remotely configured device. The transmitted signals may be short messaging service (SMS) messages or e-mail messages that include information associated with the determined health indicators.

It may be advantageous to set forth definitions of certain words and phrases used throughout this patent document. The term "couple" and its derivatives refer to any direct or indirect communication between two or more elements, whether or not those elements are in physical contact with one another. The terms "include" and "comprise," as well as derivatives thereof, mean inclusion without limitation. The term "or" is inclusive, meaning and/or. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method comprising:
receiving (402) one or more vibration signals representing physical vibrations generated by a shaft (104) of a machine (106) during operation;
determining (404) a rotational speed of the shaft;
identifying (406) one or more sets of frequency components of the vibration signals based on the speed of the shaft, each set of frequency components associated with an operational characteristic of the shaft (104); and
determining (408) one or more health indicators of the shaft based on relative energy levels of the frequency components in each set of frequency components.

2. The method of Claim 1, wherein:
the operational characteristic comprises an unbalance level of the shaft; and
the set of frequency components associated with the unbalance level comprises a frequency component having a frequency approximately equal to a frequency associated with the speed of the shaft.

3. The method of Claim 1, wherein:
the operational characteristic comprises a misalignment level of the shaft; and
the set of frequency components associated with the misalignment level comprises a harmonic component having a frequency that is approximately twice a frequency associated with the speed of the shaft.

4. The method of Claim 1, wherein:
the operational characteristic comprises a looseness level of the shaft; and
the set of frequency components associated with the looseness level comprises multiple harmonic components having a frequency approximately equal to a 0.5X, 1.5X, 2.5X, 3X, 4X, 5X, or 6X multiple of the frequency associated with the speed of the shaft.

5. An apparatus comprising:
at least one interface (118) configured to receive one or more vibration signals representing physical vibrations generated by a shaft (104) of a machine (106) during operation; and
at least one processing unit (116) configured to:
determine a rotational speed of the shaft;
identify one or more sets of frequency components of the vibration signals based on the speed of the shaft, each set of frequency components associated with an operational characteristic of the shaft; and
determine one or more health indicators of the shaft based on relative energy levels of the frequency components in each set of frequency components.

6. The apparatus of Claim 5, wherein:
the operational characteristic comprises an unbalance level of the shaft; and
the set of frequency components associated with the unbalance level comprises a frequency component having a frequency approximately equal to a frequency associated with the speed of the shaft.

7. The apparatus of Claim 5, wherein:
the operational characteristic comprises a misalignment level of the shaft; and
the set of frequency components associated with the misalignment level comprises a harmonic component having a frequency that is approximately twice a frequency associated with the speed of the shaft.

8. The apparatus of Claim 5, wherein:
the operational characteristic comprises a looseness level of the shaft; and
the set of frequency components associated with the looseness level comprises multiple harmonic components having a frequency approximately equal to a 0.5X, 1.5X, 2.5X, 3X, 4X, 5X, or 6X multiple of the frequency associated with the speed of the shaft.

9. A computer readable medium embodying a computer program, the computer program comprising computer readable program code for:
receiving (402) one or more vibration signals representing physical vibrations generated by a shaft (104) of a machine (106) during operation;
determining (404) a rotational speed of the shaft;
identifying (406) one or more sets of frequency components of the vibration signals based on the speed of the shaft, each set of frequency components associated with an operational characteristic of the shaft; and
determining (408) one or more health indicators of the shaft based on relative energy levels of the frequency components in each set of frequency components.

10. The computer program of Claim 9, wherein:
the operational characteristic comprises an unbalance level of the shaft, a misalignment level of the shaft, and a looseness level of the shaft;
the set of frequency components associated with the unbalance level comprises a frequency component having a frequency approximately equal to a frequency associated with the speed of the shaft;
the set of frequency components associated with the misalignment level comprises a harmonic component having a frequency that is approximately twice the frequency associated with the speed of the shaft; and
the set of frequency components associated with the looseness level comprises multiple harmonic components of the frequency associated with the speed of the shaft.
